(19) Europäisches Patentamt
European Patent Office
Office européen des brevets

(11) **EP 2 458 476 B1**

(12) **EUROPEAN PATENT SPECIFICATION**

(45) Date of publication and mention
of the grant of the patent:
**23.12.2015 Bulletin 2015/52**

(21) Application number: **09847599.9**

(22) Date of filing: **31.07.2009**

(51) Int Cl.:
*G06F 3/0354* (2013.01)     *G06F 3/043* (2006.01)
*G06F 3/038* (2013.01)

(86) International application number:
**PCT/KR2009/004309**

(87) International publication number:
**WO 2011/010760 (27.01.2011 Gazette 2011/04)**

(54) **METHOD AND SYSTEM FOR INPUTTING INFORMATION USING ULTRASONIC SIGNALS**

VERFAHREN UND SYSTEM ZUR INFORMATIONSEINGABE MIT ULTRASCHALLSIGNALEN

PROCÉDÉ ET SYSTÈME PERMETTANT D'ENTRER DES INFORMATIONS À L'AIDE DE SIGNAUX
ULTRASONORES

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **21.07.2009   KR 20090066205**

(43) Date of publication of application:
**30.05.2012   Bulletin 2012/22**

(73) Proprietor: **Pnf Co., Ltd
Seoul 135-539 (KR)**

(72) Inventor: **LEE, Jae Jun
Seoul 151-891 (KR)**

(74) Representative: **ABG Patentes, S.L.
Avenida de Burgos, 16D
Edificio Euromor
28036 Madrid (ES)**

(56) References cited:
**JP-A- 9 179 684          JP-A- 2004 199 560
KR-A- 20080 071 384   US-A1- 2008 169 132
US-B1- 7 525 050**

## Description

The present invention relates to an information input method and system, and more particularly, to a method and a system for inputting information without signal interference in an environment where a plurality of the information input systems using the ultrasonic signal are present.

[Background Art]

As electronic apparatuses such as computers and PDAs have been widely used, users have written notes, contacts, or the like on these electronic apparatuses instead of pocket diaries.

Particularly, as portable electronic apparatuses such as tablet PCs and PDAs have been widely spread, users have performed direct handwriting inputting and storing with respect to the portable electronic apparatuses such as a tablet PCs and PDAs by using pens or the like instead of keyboards.

In order to input information in such an electronic apparatus, it is necessary to measure a position of an input unit which is moved by a user. In the related art, as a representative input method of measuring a position of an input unit which is moved by a user and performing inputting, there is a method using a mouse. Recently, an information input method by using a touch screen of a tablet PC, a PDA, or the like has been widely used.

However, the information input method by using a touch screen has a problem in that the input area is limited to the screen of the electronic apparatus. Since the thickness of the screen is increased and the weight of the electronic apparatus is also increased due to the installation of sensors in the touch screen, the portable electronic apparatus employing the touch screen is inconvenient to use.

Recently, information input methods by using an ultrasonic signal instead of the touch screen have been widely used. In the information input method using the ultrasonic signal, a pen type signal generation apparatus moved by a user to input information generates a reference signal which propagates at the speed of light and an ultrasonic signal, and an electronic apparatus such as a notebook computer to which the information is to be input tracks aposition of the signal generation apparatus by using a reception time of the reference signal and a reception time of the ultrasonic signal to generate position information, so that the signal generation apparatus can be used for inputting as a mouse.

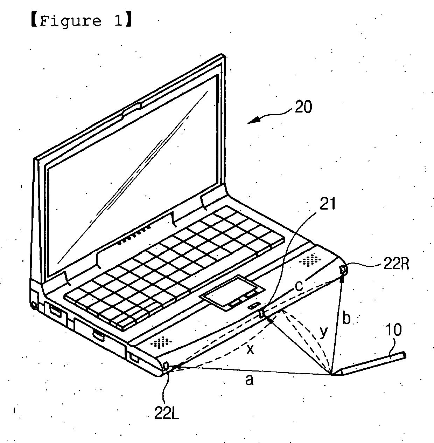

Fig. 1 is a diagram for explaining a conventional position information input method using an ultrasonic signal. The information input method using an ultrasonic signal will be more in detail with reference to Fig. 1. The signal generation apparatus 10 which is implemented with an input pen simultaneously generate and emit a reference signal and an ultrasonic signal at a predetermined time period. The information input apparatus 20 includes a reference signal reception sensor which receives the reference signal and a plurality of ultrasonic signal reception sensors each of which receives the ultrasonic signal. The ultrasonic signal reception sensors are disposed to be separated from each other by a predetermined distance.

The (x, y) coordinate of the input pen 10 may be obtained by solving the following Equation 1 with respect to x and y.

$$【\text{Equation 1}】$$

$$a^2 = x^2 + y^2$$
$$b^2 = (c-x)^2 + y^2$$

In Equation 1, since an infrared ray signal or a radio frequency signal which is the reference signal propagates at the speed of light, it is considered that the reference signal is received by the reference signal reception sensor 21 at the same time of generation of the reference signal in the input pen 10. Therefore, the distances a and b can be obtained by multiplying the speed of sound with a difference between a reception time of the reference signal and a reception time of the ultrasonic signal in the left side ultrasonic sensor 22L and by multiplying the speed of sound with a difference between a reception time of the reference signal and a reception time of the ultrasonic signal in the right side ultrasonic sensor 22R. Since the distance c is a predetermined value, the (x, y) coordinate can be obtained by applying the values a, b, and c to Equation 1.

However, in the case where a plurality of information input systems are present in adjacent areas, or in the case where a plurality of the input pens (signal generation apparatuses) are used with respect to one information input system, since a plurality of the input pens generates the respective reference signals and ultrasonic signals, interference occurs between the adjacent natural handwriting input systems or between the input pens.

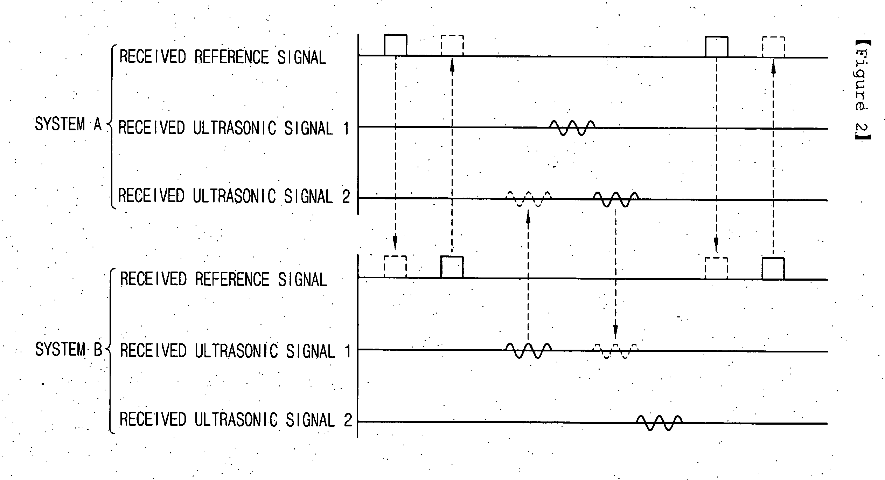

Fig. 2 is a diagram illustrating the reference signals and the ultrasonic signal received by the information input apparatuses of the systems A and B in the case where a plurality of the information input systems are present. Original signals are illustrated by solid lines, and signals generated due to interference from the adjacent system are illustrated by dotted lines.

Referring to Fig. 2, it can be understood that there is a problem in that the system A and the system B cannot accurately recognize the positions of the respective input pens due to the interference between the system A and the system B.

In addition, even in the case where a plurality of the input pens are used in one natural handwriting system, there is also a problem occurring due to the interference described above.

A Document US 2008/0169132 A1 describes a multiple styli annotation system, suitable to operate with several styli at the same time, included in an information input system which inputs information by using a reference signal and an ultrasonic signal, a stylus of the multiple styli annotation system comprising:

> a reference signal generation unit which generates the reference signal;
>
> an ultrasonic generation unit which generates an ultrasonic signal;
>
> a reference signal reception unit which receives a reference signal; and
>
> the multiple styli annotation system using Time Domain Multiple Access (TDMA) signalling technique for controlling the generation of the reference signal and the ultrasonic signal so that the reference signal and the ultrasonic signal generated by a stylus (i.e. a signal generation apparatus) do not interfere with a reference signal and an ultrasonic signal generated by another styli (i.e. a different information input system).

[Disclosure]

[Technical Problem]

The present invention provides an ultrasonic signal input system andmethod capable of inputting information without signal interference in an environment where the input system using a plurality of ultrasonic signals are present.

[Technical Solution]

One aspect of the present invention is a signal generation apparatus as defined in independent claim 1. A second aspect of the present invention is an information input apparatus as defined in independent claim 9. Third and fourth aspects of the invention are each directed to an information input method as defined in independent claims 18 and 21, respectively. Further embodiments of the invention are specified in the respective appended dependent claims.

[Advantageous Effects]

According to the present invention, a signal generation apparatus for generating a reference signal and an ultrasonic signal or an information input apparatus for generating a reference signal receives a reference signal and an ultrasonic signal which are generated by a different signal generation apparatus which inputs information in an adjacent area or the information input apparatus, determines whether or not there is a possibility of interference of the signals generated by the different signal generation apparatus or the information input apparatus, and adaptively changes an effective section where the reference signal and the ultrasonic signal are generated to an idle section in the same period or the next period if it is determined that there is a possibility of the interference, so that the signal interference is prevented. Therefore, according to the present invention, even in the environment where a plurality of the information input systems are present, it is possible to stably input information.

[Description of Drawings]

> Fig. 1 is a diagram for explaining a conventional information input method using an ultrasonic signal.
> Fig. 2 is a diagram illustrating reference signals and ultrasonic signals which are received by information input apparatuses of systems A and B in the case where a plurality of the information input systems are present.
> Fig. 3 is a block diagram illustrating a configuration of an information input system according to the first embodiment of the present invention.
> Fig. 4 is a timing diagram for explaining an effective section changing process of allowing a signal generation apparatus to generate a reference signal and an ultrasonic signal.
> Fig. 5 is a flowchart for explaining an information input method according to the first embodiment of the present invention.
> Fig. 6 is a block diagram illustrating a configuration of an information input system according to a third embodiment of the present invention.
> Fig. 7 is a flowchart for explaining an information input method according to the third embodiment of the present invention.
> Fig. 8 is a diagram illustrating a configuration of an information input system according to the fifth embodiment of the present invention.
> Fig. 9 is a block diagram illustrating a detailed configuration of an information input system according to the fifth embodiment of the present invention.
> Fig. 10 is a timing diagram for explaining an effective section changing process according to the fifth embodiment of the present invention.
> Fig. 11 is a diagram for explaining an example illustrated in Fig. 10.
> Fig. 12 is a flowchart for explaining an information input method according to the fifth embodiment of the present invention.

[Best Mode]

Hereinafter, exemplary embodiments of the present invention will be described with reference to the accompanying drawings. In the drawings, the same reference numeral denotes the same component, and for the convenience of description, a plurality of the same components are denoted by one reference numeral.

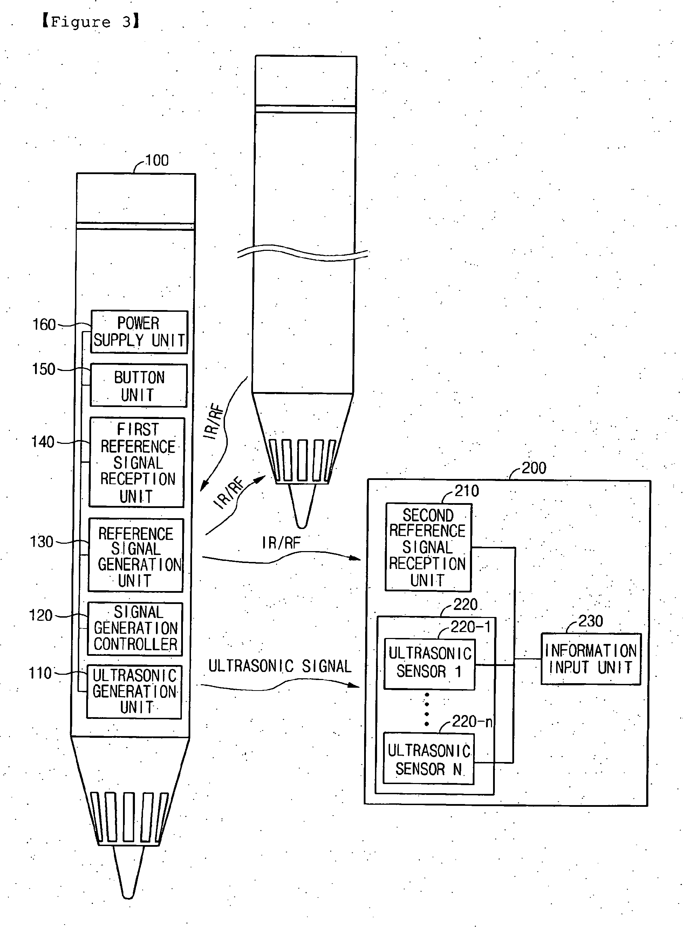

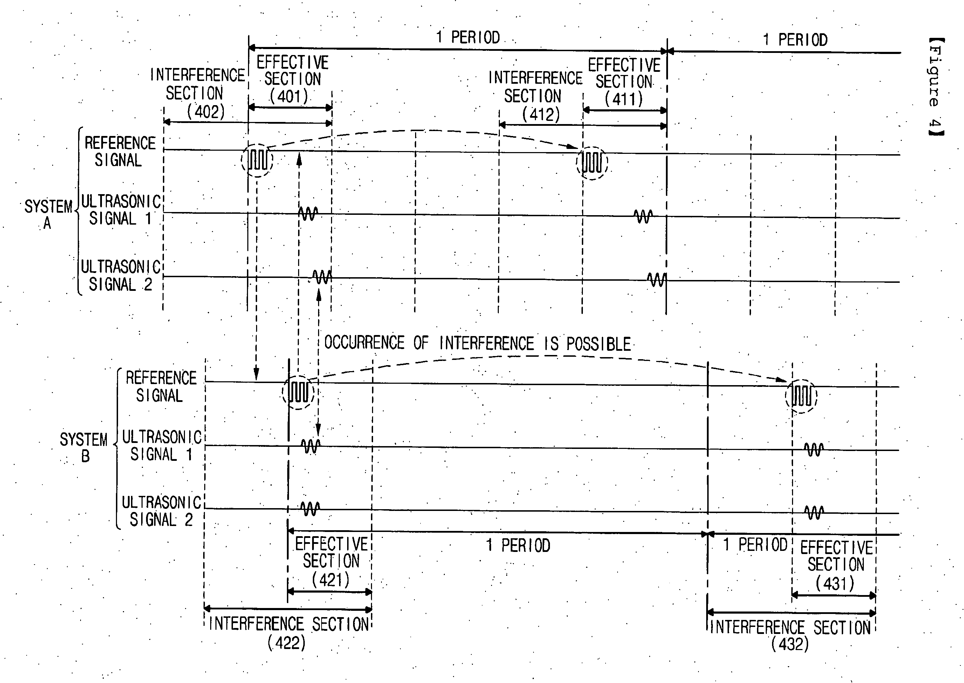

Fig. 3 is a block diagram illustrating a configuration of an information input system according to a first embodiment of the present invention, and Fig. 4 is a timing diagram for explaining an effective section changing process for generating a reference signal and an ultrasonic signal in a signal generation apparatus 100. Referring to Figs. 3 and 4, the information input system according to the first embodiment of the present invention includes a signal generation apparatus 100 which generates a reference signal and an ultrasonic signal at a predetermined time period and an information input apparatus 200 which measures a position of the signal generation apparatus 100 by using the reference signal and the ultrasonic signal generated by the signal generation apparatus 100 and inputs information by using the position information of the signal generation apparatus 100.

The signal generation apparatus 100 includes a reference signal generation unit 130, a first reference signal reception unit 140, an ultrasonic generation unit 110, a button unit 150, a signal generation controller 120, and a power supply unit 160.

The reference signal generation unit 130 generates the reference signal such as an infrared ray signal or an RF signal which propagates at the speed of light according to a control signal input from the signal generation controller 120. The reference signal basically includes identification information which identifies the signal generation apparatus 100. In the case where button information is generated by a button unit 150, the reference signal may also include button information. In addition, the reference signal may also include length information of an effective section described later.

The first reference signal reception unit 140 receives a reference signal which is generated by a different signal generation apparatus which is present in an adjacent area.

The ultrasonic generation unit 110 generates an ultrasonic signal according to a control signal input from the signal generation controller 120.

The button unit 150 is disposed in the signal generation apparatus 100. When a user push a button disposed in the signal generation apparatus 100, the button information is generated. In addition, in the case where the signal generation apparatus 100 according to the present invention is configured as a pen type, the button unit 150 includes a button disposed in the pen and a pressure sensor for sensing contact and handwriting pressure when a user allows a pen tip to come in contact with a writing surface in order to perform writing. Therefore, in this case, the button information may include contact information of the button which is configured to be pushed by the user and contact information and pressure information of the pen tip. Hereinafter, the "button information" includes entire information generated by the signal generation apparatus 100 according to manipulation of the user.

The signal generation controller 120 outputs a control signal to the reference signal generation unit 130 and the ultrasonic generation unit 110 to generate the reference signal and the ultrasonic signal.

Herein, when the signal generation apparatus 100 is to generate the reference signal and the ultrasonic signal at a predetermined time period, the time section where the reference signal and the ultrasonic signal are generated is defined as an effective section, and the time section where the effective section is excluded from the time period is defined as an idle section.

In addition, a time area in the idle section where there is a possibility of interference of the reference signal and the ultrasonic signal generated by the signal generation apparatus 100 with the reference signal and the ultrasonic signal generated by the different information input system is defined as an interference section. The interference section includes an effective section and a predetermined time section before the effective section. In some cases, the interference section may also include a predetermined time area after the effective section. In the embodiment of the present invention described later, for the convenience of the description, it is assumed that the interference section includes an effective section and an idle section located before the effective section, of which the length is the same as the length of the effective section.

The signal generation controller 120 generates the reference signal and the ultrasonic signal in the effective section at the same time or by a predetermined time difference. If the different information input system generates the reference signal in the effective section or the interference section, the signal generation controller 120 determines that there is a possibility of interference between the reference signal and the reference signal generated by the signal generation controller 120 and shifts the effective section thereof into the idle section where the interference section in the same time period or the next time period is excluded.

At this time, the signal generation controller 120 can shift the effective section to an arbitrary time point in the idle section, divides the time period into a plurality of the time sections corresponding to the length of the effective section in advance, and shift the effective section to a predetermined section or an arbitrary section among the sections included in the idle section. A configuration for shifting the effective section will be described later with reference to Fig. 4.

In addition, the signal generation controller 120 controls the reference signal generation unit 130 so that the reference signal includes the identification information and the button information of the signal generation apparatus 100.

The power supply unit 160 is implemented with a primary battery or a secondary battery to supply power to the aforementioned components.

On the other hand, the information input apparatus 200 includes a second reference signal reception unit 210, an ultrasonic reception unit 220, and an information input unit 230. The information input apparatus 200 may be implemented with a mobile apparatus such as a computer, a PDA, and a mobile phone. Otherwise, information input apparatus 200 may be implemented as an independent module and be connected to a mobile apparatus such as a computer, a PDA, and a mobile phone.

The second reference signal reception unit 210 receives the reference signal and outputs the reference signal to the information input unit 230.

In the ultrasonic reception unit 220, two or more ultrasonic sensors 220-1 to 220-n are disposed to be separated from each other by a predetermined distance, and each of the ultrasonic sensors 220-1 to 220-n receives the ultrasonic signal and outputs the ultrasonic signal to the information input unit 230.

The information input unit 230 extracts the identification information from the reference signal received by the second reference signal reception unit 210 and identifies the reference signal generated by the signal generation apparatus 100 corresponding to the information input apparatus 200. The information input unit 230 measures the position of the signal generation apparatus 100 by using the ultrasonic signal received by the ultrasonic reception unit 220 in the same effective section as that of, the corresponding reference signal and generates the position information.

More specifically, in an environment where a plurality of the information input systems are present, the information input unit 230 receives a plurality of the reference signals and checks the identification information included in a plurality of the reference signals to identify the reference signal generated by the signal generation apparatus 100 corresponding to, the information input unit 230.

The information input unit 230 detects the ultrasonic signal received in the same effective section as that of the reference signal corresponding to the information input unit 230. The time where the ultrasonic signal is generated by the signal generation apparatus 100 is estimated by using the reception time of the reference signal.

At this time, it is assumed that the time period where the reference signal and the ultrasonic signal are generated by the signal generation apparatus 100 is defined in advance. In the case where the length of the effective section and the time period are divided into a plurality of time sections in advance, the number of the time sections may also be defined in advance. In the case where the number of the time sections can be varied, the information on the length of the effective section (the information on the number of the time sections included in one period) may be further included in the reference signal, and the information input unit may identify the ultrasonic signal received in the effective section by using the information.

In the case where the reference signal and the ultrasonic signal are simultaneously generated by the signal generation apparatus 100, the reception time of the reference signal is estimated to the generation time of the ultrasonic signal. In the case where the reference signal and the ultrasonic signal are generated by a predetermined time difference, the generation time of the ultrasonic signal is estimated by taking into consideration the predetermined time difference.

Next, the information input unit 230 calculates the distance between each of the ultrasonic reception units 220 and the signal generation apparatus 100 by multiplying the speed of sound with the time taken for the ultrasonic signal generated by the signal generation apparatus 100 to reach each of the ultrasonic reception units 220 which are disposed to be separated from each other and measures the position of the signal generation apparatus 100 according to the aforementioned Equation 1 to generate the position information.

In addition, in the case where the button information is included in the reference signal, the information input unit 230 outputs the button information together with the position information. In the case where the information input apparatus 200 according to the present invention is embodied in a software manner in a computer, a PDA, a mobile phone, or the like (hereinafter, referred to as a computer or the like), the information may be output as an input value to other application program installed in the computer or the like. In the case where the above apparatus is connected to another electronic apparatus through wireless or wired communication such as a USB or a Bluetooth, the information may be output as an input value to another electronic apparatus.

Referring to Fig. 4 again, Fig. 4 illustrates the reference signals and the ultrasonic signals received by each of the information input apparatuses in the case where the information input system A and the information input system B performs information inputting by using the reference signals and the ultrasonic signals. In Fig. 4, it is assumed that the reference signal and the ultrasonic signal are simultaneously generated.

In the example illustrated in Fig. 4, the system A divides one time period into five time sections in advance and shifts the effective section (the time period is configured to include one effective section and four idle sections), and the system B shifts the effective section to an arbitrary time point without division of the time period into time sections.

As described above with reference to Fig. 3, in the case where there may be a possibility of signal interference with respect to the different information input system which performs information inputting in the adjacent area, the signal generation apparatus 100 according to the present invention shifts the effective section where the reference signal and the ultrasonic signal are generated.

Referring to Fig. 4, the signal generation apparatus 100A of the information input system A generates the reference signal and the ultrasonic signal in the effective section 401 at the same time, and the reference signal and the ultrasonic signal are received in the same effective section 401 by the information input apparatus 200A of the information input system A.

However, since the signal generation apparatus 100B of the information input system B also generates the reference signal and the ultrasonic signal in the time section 421 adjacent to the effective section 401 where the reference signal is generated by the system A, the reference signal and the ultrasonic signal generated by the signal generation apparatus 100B of the system B is received by the information input apparatus 200A of the system A, so that there may be a possibility of signal interference.

If the reference signal of the different signal generation apparatus is received in the effective section 401 of the signal generation controller 120A (that is, the interference section 402 of the system A), the signal generation controller 120A of the signal generation apparatus 100A of the system A shifts the effective section to the final idle section 411 in the same time period by shifting four time sections in order to prevent the signal interference. Due to the shifting of the effective section 411, the interference section 412 of the system A is also newly set.

On the other hand, in the information input system B, the reference signal generated by the signal generation apparatus 100A of the system A is received in the interference section 422 which is the time area having a predetermined time length before the effective section of the information input system B. In this case, the ultrasonic signal generated by the signal generation apparatus 100A of the system A may be received by the information input apparatus 200B in the effective section 421 of the system B, so that there may be a possibility of signal interference between the ultrasonic signals. Therefore, the signal generation apparatus 100B of the system B shifts the effective section 421 of the signal generation apparatus 100B to an arbitrary time point 431 in the idle section where the interference section in the next time period is excluded. Due to the shifting of the effective section 431, the interference section 432 of the system B is also newly set.

As described above, it can be understood that, after the shifting of the effective section, there is no possibility of interference between the system A and the system B.

Besides the method illustrated in Fig. 4, various methods of shifting the effective section can used. For example, in the case where there is a possibility of signal interference, the effective section may be shifted to the adjacent idle section by one section.

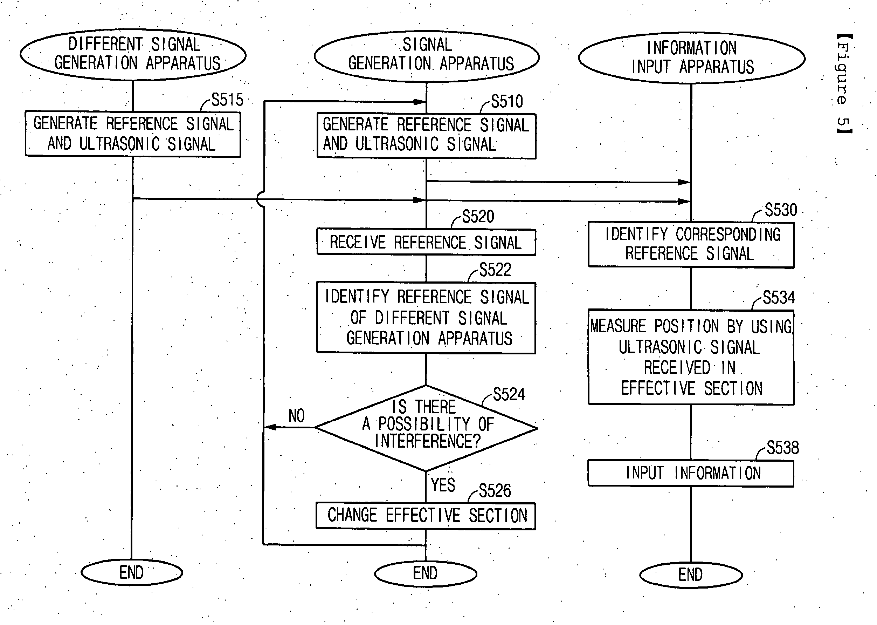

Fig. 5 is a flowchart for explaining an information input method according to an embodiment of the present invention. With respect to the processes of measuring the position of the signal generation apparatus 100 and inputting information in the environment where a plurality of the information input systems according to the present invention are present, the processes are described above with reference to Figs. 3 and 4, and thus, an overall flow of the processes will be described with reference to Fig. 5.

First, the signal generation apparatus 100 corresponding to the information input apparatus 200 generates the reference signal and the ultrasonic signal at a predetermined time period (Step S510), and the different signal generation apparatus which inputs information in the adjacent area also generates the reference signal and the ultrasonic signal at a predetermined time period (Step S515).

The first reference signal reception unit 140 of the signal generation apparatus 100 receives the reference signal generated by the signal generation apparatus 100 and the reference signal generated by the different signal generation apparatus (Step S520). The reference signal generated by the different signal generation apparatus is identified by using the identification information included in the reference signal (Step S522).

The signal generation apparatus 100 checks the time where the reference signal of the different signal generation apparatus is received, and in the case where there is no possibility of signal interference, the process proceeds to Step S510.(Step S524). In the case where there is a possibility of signal interference (for example, the case where the reference signal of the different signal generation apparatus is received in the interference section in the aforementioned example), the signal generation apparatus 100 shifts the effective section, and the process proceeds to Step S510 to generate the reference signal and the ultrasonic signal (Step S526).

In addition, while the aforementioned Steps S510 to S526 are repetitively performed, the information input apparatus 200 extracts the identification information from a plurality of the reference signals received by the second reference signal reception unit 210 to identify the reference signal generated by the signal generation apparatus 100 corresponding to the information input apparatus 200 (Step S530), and the information input apparatus 200 measures the position of the signal generation apparatus 100 by using the ultrasonic signal which is received in the predetermined effective section from the reception time of the reference signal or in the time corresponding to the effective section the length information included in the reference signal (Step S534).

If the position is measured, the information input apparatus 200 inputs the position information together with the button information included in the reference signal to an external electronic apparatus or an application program (Step S538).

Hereinbefore, the exemplary first embodiment of the present invention is described. The information input system using the ultrasonic signal according to the second embodiment of the present invention includes a plurality of signal generation apparatuses and one information input apparatus.

In the second embodiment, each of the signal generation apparatuses detects the reference signal emitted by the adjacent different signal generation apparatus and shifts the effective section by using the same method as that of the first embodiment described above.

In addition, the information input apparatus according to the second embodiment checks the identification information included in the reference signal of the signal generation apparatus received from each of the signal generation apparatuses to identify the signal generation apparatuses. The information input apparatus measures the position of each of the signal input apparatuses by using a time difference between the reception time of the reference signal and the reception time of the ultrasonic signal received in the same effective section as that of the reference signal and input information by using the same method as described above.

Similarly to the first embodiment, the reference signal may include period information, information on a length of an effective section included in a period and the number of idle sections, and the like. Therefore, the detailed description thereof is omitted. In addition, the other configurations are the same as those of the first embodiment, and thus, the detailed description thereof is omitted.

In the first and second embodiments, although the signal generation apparatus receives the reference signal from the different signal generation apparatus and changes the effective section, it should be noted that, similarly to the third and fourth embodiments described later, even in the case where the reference signal is generated by an information input apparatus of a different information input system, the effective section can be changed in the same method as described above.

On the other hand, in the third embodiment described hereinafter, the information input apparatus generates the reference signal. When the signal generation apparatus receives the reference signal, the signal generation apparatus immediately generates the ultrasonic signal, and the information input apparatus measures the position of the signal generation apparatus by using a time difference between the generation time of the reference signal and the reception time of the ultrasonic signal and inputs the information.

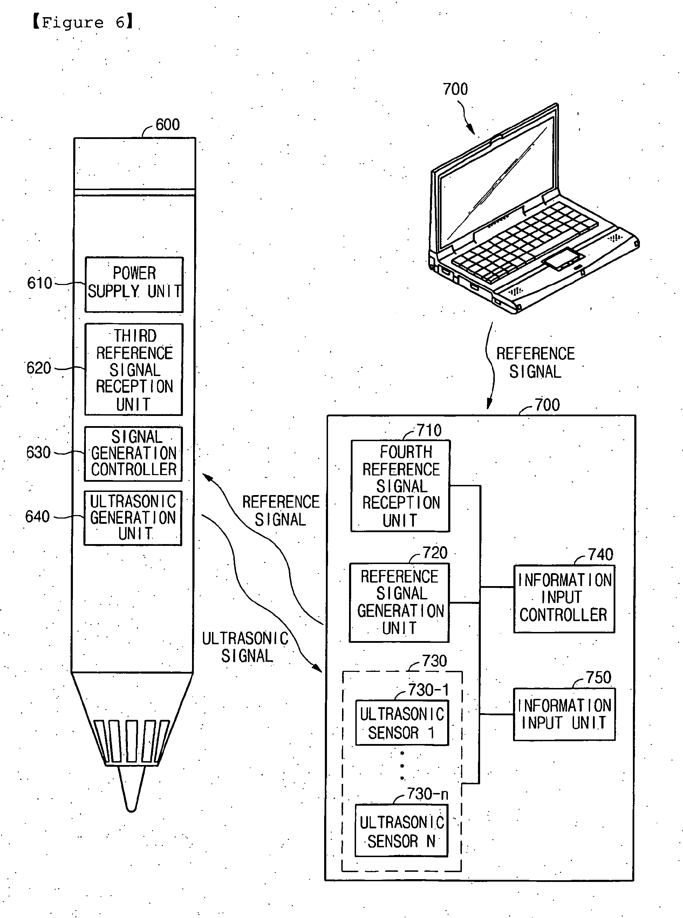

Fig. 6 is a block diagram illustrating a configuration of an information input system according to the third embodiment of the present invention. Referring to Fig. 6, the signal generation apparatus 600 includes a power supply unit 610, a third reference signal reception unit 620, a signal generation controller 630, and an ultrasonic generation unit 640.

In addition, the information input apparatus 700 includes a fourth reference signal reception unit 710, a reference signal generation unit 720, an ultrasonic reception unit 730 constructed with a plurality of the ultrasonic sensors which are disposed to be separated from each other by a predetermined distance, an information input unit 750, and an information input controller 740.

First, the functions of the components included in the signal generation apparatus 600 are described. Similarly to the first embodiment, the power supply unit 610 is constructed with a primary battery, a second battery, or the like to supply power to the components included in the signal generation apparatus 600.

The third reference signal reception unit 620 receives the reference signal from the information input apparatus 700 and outputs the reference signal to the signal generation controller 630.

The signal generation controller 630 checks the identification information included in the reference signal of the information input apparatus 700. In the case where the reference signal is received from the information input apparatus 700 corresponding to the signal generation apparatus 600, the signal generation controller 630 outputs a control signal to the ultrasonic generation unit 640.

If the control signal is input from the signal generation controller 630, the ultrasonic generation unit 640 generates the ultrasonic signal.

On the other hand, the components included in the information input apparatus 700 have the functions as follows. If a control signal which instructs the generation of the reference signal is received from the information input controller 740, the fourth reference signal generation unit 720 generates the reference signal where the identification information of allowing the signal generation apparatus 600 to identify the information input apparatus 700 is included.

In the ultrasonic reception unit 730, the two or more ultrasonic sensors 220-1 to 220-n are disposed to be separated from each other by a predetermined distance, and each of the ultrasonic sensors 220-1 to 220-n receives the ultrasonic signal and outputs the ultrasonic signal to the information input unit 750.

The fourth reference signal reception unit 710 receives the reference signal generated by the different information input apparatus 700 which is present in the adjacent area or by the signal generation apparatus 600 and outputs the reference signal to the information input controller 740.

The information input controller 740 outputs a control signal to the reference signal generation unit 720 to generate a reference signal where the identification information is included. At this time, in the case where the time period where the reference signal is generated is divided into a plurality of the time sections, the information input controller 740 generates the reference signal in one of the time sections. In the case where the time section is not divided, the information input controller 740 may generate the reference signal at an arbitrary time point.

In addition, the information input controller 740 identifies the time section where the reference signal is generated by the different signal generation apparatus which performs information inputting in the adjacent area or the information input apparatus from the reference signals received by the fourth reference signal reception unit 710. In the case where there may be a possibility of signal interference between the reference signal and the ultrasonic signal generated by the different signal generation apparatus or the information input apparatus and the reference signal generated by the information input apparatus and the ultrasonic signal generated by the signal generation apparatus 600 corresponding to the information input apparatus, the information input apparatus shifts the effective section thereof and generates the reference signal.

If the reference signal generated by the different signal generation apparatus or the information input apparatus is received in the effective section of the information input apparatus and in the predetermined time (interference section) before the effective section, the information input controller 740 determines that there may be a possibility of signal interference between the reference signal and the ultrasonic signal in the effective section of the information input apparatus, so that the information input controller 740 shifts the effective section to the idle section by a predetermined time section or to an arbitrary time point.

At this time, the effective section may be shifted to the idle section where the interference section in the same period is excluded or shifted to the idle section where the interference section in the next period is excluded. Since the method of shifting the effective section in the information input apparatus is the same as the method of shifting the effective section in the signal generation apparatus 600 described with reference to Fig. 4, the detailed description thereof will be omitted.

The second information input unit 750 measures the position of the signal generation apparatus by using a time difference between the generation time of the reference signal input from the information input controller 740 and the reception time of the ultrasonic signal generated by the signal generation apparatus 600 in the effective section where the reference signal is generated and stores the measured position information therein or provides the position information to an external electronic apparatus as an output. Since detailed operations of the second information input unit 750 are similar to the operations the information input unit 230 illustrated in Fig. 3 according to the first embodiment, the detailed description thereof will be omitted.

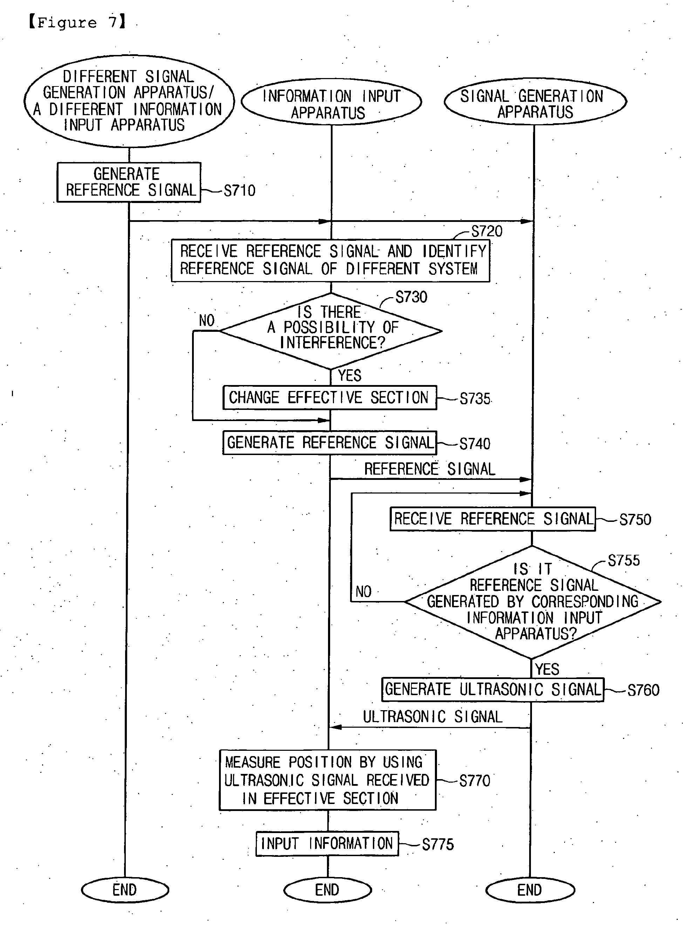

On the other hand, Fig. 7 is a flowchart for explaining an information input method according to a third embodiment of the present invention. Referring to Fig. 7, First, in the different information input system, a reference signal is generated (Step S710). In other words, similarly to the first and second embodiments, the signal generation apparatus generates the reference signal, or the information input apparatus according to the third embodiment may also generate the reference signal.

The information input apparatus 700 receives the reference signal generated by the different information input system, checks the identification information included in the reference signal to identify the received reference signal as the reference signal generated by the different information input system (Step S720).

The information input apparatus 700 checks based on the result of the identification of the reference signal whether or not there is a possibility of signal interference due to the effective section, where the different information input system generates the reference signal, overlapping the interference section (Step S730). As described above, in the case where there is a possibility of interference, the information input apparatus 700 shift the effective section thereof (Step S735).

After that, the information input apparatus 700 generates the reference signal in the previous effective section or the changed effective section (Step S740).

On the other hand, the signal generation apparatus 600 receives the reference signal of the different information input system generated in Step S710 described above and the reference signal generated in Step S740 (Step S750). The signal generation apparatus 600 checks the identification information included in the reference signal and determines whether or not the received reference signal is the reference signal generated by the information input apparatus 700 corresponding to the signal generation apparatus 600 (Step S755).

As a result of the determination, in the case where the reference signal generated by the corresponding information input apparatus 700 is received, the signal generation apparatus 600 generates the ultrasonic signal (Step S760).

On the other hand, the information input apparatus 700 receives the ultrasonic signal and measures the position of the signal generation apparatus 600 by using the ultrasonic signal received in the effective section where the reference signal is generated in Step S740 (Step S770). The information input apparatus 700 inputs the information to an external electronic apparatus or an application program according to the position information of the.signal generation apparatus 600 (Step S775).

Similarly to the first and second embodiments, the reference signal may include identification information, period information, information on a length of an effective section included in a period and the number of idle sections, and the like. Therefore, the detailed description thereof is omitted.

Hereinbefore, the exemplary third embodiment of the present invention is described. In the third embodiment, the information input apparatus generates the reference signal and receives the reference signal generated by the different information input system to shift the effective section. Although one signal generation apparatus is configured to correspond to one information input apparatus in the third embodiment, in the fourth embodiment as a modified example of the second embodiment, a plurality of the signal generation apparatuses may be configured to correspond to one information input apparatus.

In the fourth embodiment, the information input apparatus determines the effective section by taking into consideration the number of the signal generation apparatuses from which the information input apparatus receives information. In addition, the information input apparatus transmits the reference signal including the identification information allocated to each of the signal generation apparatuses to each of the signal generation apparatuses. At this time, the information input apparatus may individually allocate the effective section to each of the signal generation apparatuses and shift the effective section allocated to each of the signal generation apparatuses by using the same method as illustrated in Fig. 4 by taking into consideration a possibility of interference with respect to the different information input system. The other configurations are the same as those of the third embodiment described above, and thus, detailed description thereof is omitted.

Similarly to the first to third embodiments, the reference signal may include identification information, period information, information on a length of an effective section included in a period and the number of idle sections, and the like. Therefore, the detailed description thereof is omitted.

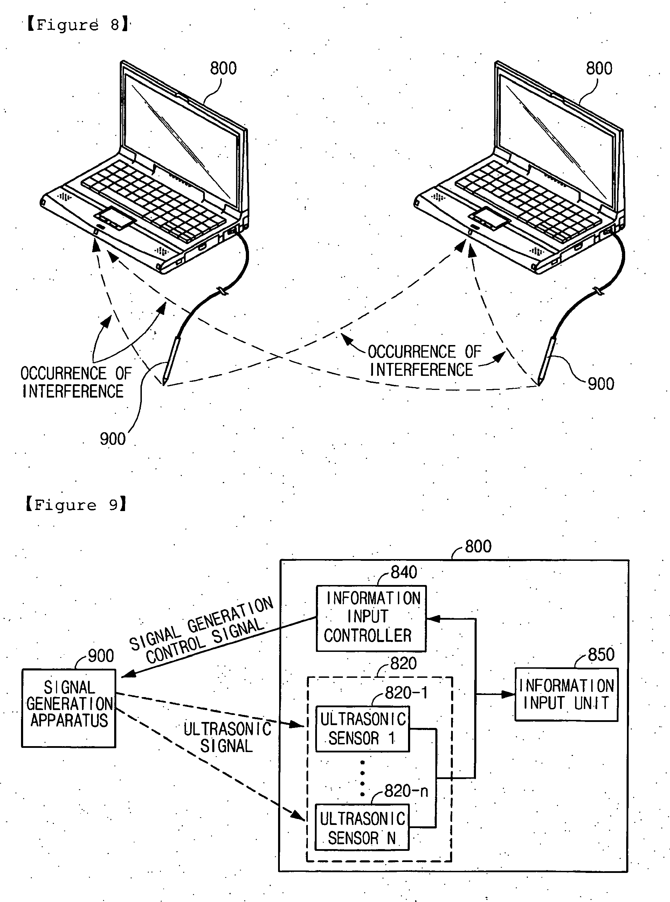

Fig. 8 is a diagram illustrating a configuration of an information input system according to the fifth embodiment of the present invention.

Referring to Fig. 8, in the fifth embodiment of the present invention, the signal generation apparatus 900 which generates the ultrasonic signal is connected to the information input apparatus 800 through a wire. The signal generation apparatus 900 receives a control signal from the information input apparatus 800 through a wire to generate the ultrasonic signal.

Therefore, in the fifth embodiment, there may be no possibility of signal interference between the reference signals, but there may be a possibility of signal interference between the ultrasonic signals generated by the signal generation apparatuses. Therefore, in the fifth embodiment, as described later, it is determined by using the ultrasonic signal whether or not interference occurs, and the effective section where the ultrasonic signal is generated is configured to be changed.

Fig. 9 is a block diagram illustrating a detail configuration of an information input system according to the fifth embodiment of the present invention. Referring to Fig. 9, the information input system according to the fifth embodiment of the present invention includes a signal generation apparatus 900 and an information input apparatus 800. The signal generation apparatus 900 is connected to the information input apparatus 800 through wires. The signal generation apparatus 900 is supplied with power and a control signal (signal generation control signal) which instructs the signal veneration apparatus 900 to generate the ultrasonic signal by the information input apparatus 800, and the signal generation apparatus 900 generates the ultrasonic signal immediately after receiving the signal generation control signal.

The information input apparatus 800 includes an information input controller 840, an ultrasonic reception unit 820, and an information input unit 850.

In the ultrasonic reception unit 820, two or more ultrasonic sensors 820-1 to 820-n are disposed to be separated from each other by a predetermined distance, and each of the ultrasonic sensors 820-1 to 820-n receives the ultrasonic signal and outputs the ultrasonic signal to the information input unit 850.

The information input unit 850 measures the position of the signal generation apparatus by using a time difference between the input time of the signal generation control signal input from the information input controller 840 and the reception time of the ultrasonic signal generated by the signal generation apparatus 900 in the effective section where the signal generation control signal is generated.

In the first to fourth embodiment described above, the time where the ultrasonic signal is generated is estimated by using the time where the reference signal is generated or received. However, in the fifth embodiment, the time where the ultrasonic time is generated is estimated by using the time where the signal generation control signal which instructs the signal generation apparatus to generate the ultrasonic signal is output to the signal generation apparatus 900.

The information input unit 850 outputs the measured position information to the information input controller 840 and stores the measured position information therein or outputs the position information to an external electronic apparatus. The detailed operations of the information input unit 850 are similar to the operations of the information input unit 230 according to the first embodiment illustrated in Fig. 3 and the operations of the information input unit 750 according to the third embodiment illustrated in Fig. 6, and thus, detailed description thereof is omitted.

The information input controller 840 determines based on the position information of the signal generation apparatus 900 input from the information input unit 850 whether or not the interference of the ultrasonic signal occurs. If the interference occurs, the information input controller 840 shifts the effective section to an arbitrary time point in the idle section where the interference of the ultrasonic signal can be prevented, generates a signal generation control signal in the effective section, and outputs the signal generation control signal to the signal generation apparatus 900 and the information input unit 850. At this time, in the case where the length of the effective section is variable, the information input controller 840 also outputs the time length information of the effective section to the information input unit 850.

In the fifth embodiment, since the reference signal generated by the different information input system is not received, a possibility of signal interference cannot be determined based on the reference signal. Therefore, in the fifth embodiment, it is checked whether or not the interference of the ultrasonic signal actually occurs due to the ultrasonic signal generated by the different information input system so that the position information of the signal generation apparatus generated by the information input apparatus is varied greatly by the predetermined distance or more, and if the interference actually occurs, the effective section is allowed to be shifted.

In order to perform this, the information input controller 840 stores a predetermined number of the position information pieces which are input last from the information input unit 850. By comparing the distances between the positions indicated by the position information pieces, the newly input position is compared with the positions which are previously stored. In the case where the distance is greatly changed by a predetermined distance or more, it is determined that the interference between the ultrasonic signals occurs. The interference is prevented by shifting the effective section to an arbitrary time point in the idle section where the interference section in the same time period or the next time period is excluded by using the same method as described with reference to Fig. 4 in the first to fourth embodiments or by shifting the effective section by a predetermined number of the idle sections in the case where the idle section is divided into a plurality of idle sections.

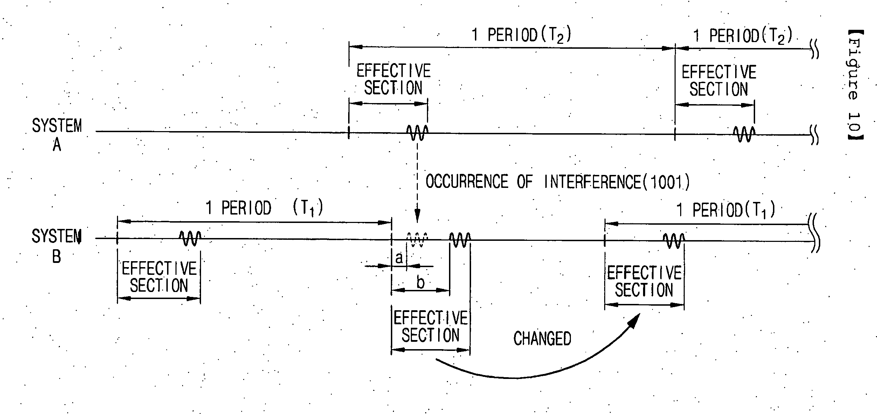

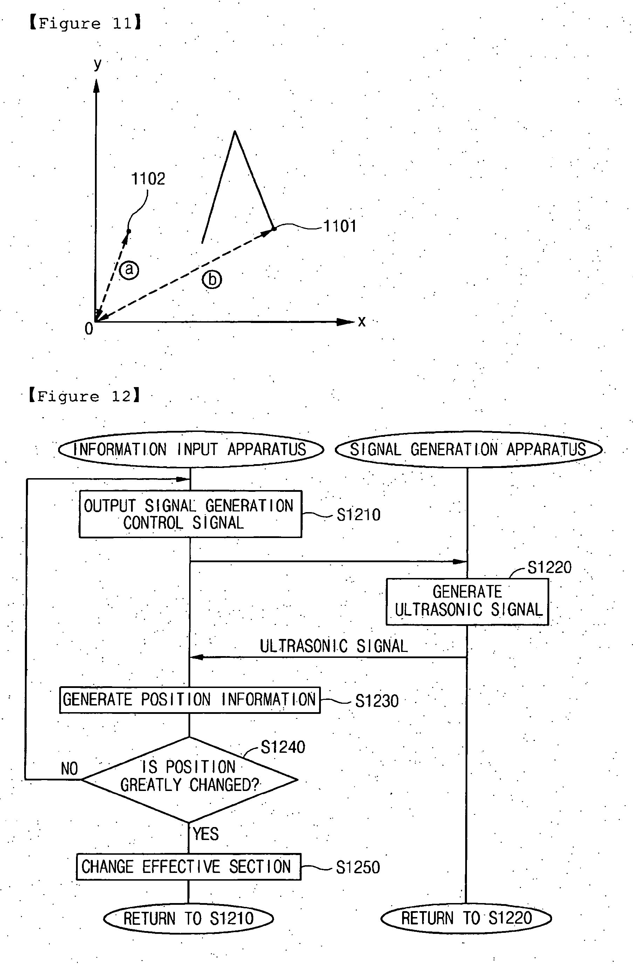

Fig. 10 is a timing diagram for explaining an effective section changing process according to the fifth embodiment, and Fig. 11 is a diagram for explaining an example illustrated in Fig. 10.

Referring to Figs. 10 and 11, in the fifth embodiment, when a user inputs the alphabet "A" by using the system B, the system B generates the ultrasonic signal at a predetermined time period (T1) and measures the position of the signal generation apparatus to input the information. If the different system A generates an ultrasonic signal at a predetermined time period (T2) in the effective section of the system B in order to performing information inputting, interference between the ultrasonic signals occurs (1001).

Due to the interference between the ultrasonic signals, the position of the signal generation apparatus 900 measured by the information input unit 800 is greatly changed from the position indicated by reference numeral 1101 to the position indicated by reference numeral 1102. Since the great change is not possible in an actual handwriting input process, in this case, it is determined that there is an error due to the interference between the ultrasonic signals. The information input controller 840 shifts the effective section as illustrated in Fig. 10 to prevent the interference between the ultrasonic signals.

Fig. 12 is a flowchart for explaining an information input method according to the fifth embodiment of the present invention.

Referring to Fig. 12, first, the information input apparatus outputs the signal generation control signal to the signal generation apparatus connected thereto through wires at a predetermined time period (Step S1210). As described above, each time period is configured to include an effective section where the signal generation control signal is output by the information input apparatus and the ultrasonic signal is generated by the signal generation apparatus which receives the signal generation control signal and an idle section where the effective section is excluded.

The signal generation apparatus which receives the signal generation control signal immediately generates an ultrasonic signal (Step S1220). However, in the embodiment of the present invention, although the signal generation apparatus which receives the signal generation control signal is configured to immediately generate the ultrasonic signal, the signal generation apparatus may generate the ultrasonic signal by a predetermined time difference.

The ultrasonic signal generated by the signal generation apparatus is received by each of the ultrasonic sensors of the information input apparatuses which are disposed to be separated from each other, and the information input apparatus generates the position information by measuring the position of the signal generation apparatus by using a time difference between the reception time of the ultrasonic signal received from the signal generation apparatus in the effective section where the signal generation control signal is output to the signal generation apparatus and the output time of the signal generation control signal (Step S1230).

On the other hand, by comparing the position of the signal generation apparatus measured in Step S1230 with the position of the signal generation apparatus measured in the previous time period, the information input apparatus checks whether or not the position is greatly changed by a predetermined distance or more. As a result of the checking, in the case where the position is not greatly changed, the process proceeds to Step S1210 (Step S1240).

As a result of the checking in Step S1240, in the case where it is determined that the position is greatly changed, the information input apparatus shifts the effective section, and the process proceeds to Step S1210 to output the signal generation control signal again (Step S1250). The method of shifting the effective section in Step S1250 is the same as those of the first to fourth embodiments. In other words, the effective section may be shift to an arbitrary time point in the idle section where the interference section in the same time period is excluded or in the idle section where the interference section in the next time period is excluded. In addition, in the case where the idle section is divided into a plurality of the idle sections in advance, the effective section may also be shifted by shifting the idle section where the interference section is excluded by a predetermined section.

The present invention can also be embodied as computer readable codes on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, and carrier waves (such as data transmission through the Internet). The computer-readable recording medium can also be distributed over network coupled computer systems so that the computer readable code is stored and executed in a distributed fashion.

**Claims**

1. A signal generation apparatus (100) included in an information input system which inputs information by using a reference signal and an ultrasonic signal, comprising:

   a reference signal generation unit (130) which instructs the generation of the reference signal;
   an ultrasonic generation unit (110) which generates the ultrasonic signal;
   a reference signal reception unit (140) which receives the reference signal; and
   a signal generation controller (120) which instructs the generation of the reference signal and the ultrasonic signal at a predetermined time period including an effective section where the reference signal and the ultrasonic signal are generated and an idle section and which determines the possibility of interference of the reference signal and the ultrasonic signal with a reference signal and an ultrasonic signal generated by a different information input system using the reference signal which is generated by the different information input system and received by the reference signal reception unit (140), and which outputs a control signal for controlling generation of the reference signal and the ultrasonic signal to the reference signal generation unit (130) and the ultrasonic generation unit (110) so that the reference signal and the ultrasonic signal generated by the signal generation apparatus (100) do not interfere with the reference signal and the ultrasonic signal generated by the different information input system by shifting the effective section to the idle section in the same time period or the next time period in case where there is possibility of interference.

2. The signal generation apparatus (100) according to claim 1, wherein the signal generation controller (120) instructs the generation of the reference signal and the ultrasonic signal at a predetermined time period, and in the case where there is a possibility of interference of the reference signal and the ultrasonic signal with the reference signal and the ultrasonic signal generated by the different information input system, the signal generation controller (120) shifts an effective section where the reference signal and the ultrasonic signal are generated to an arbitrary time point in an idle section in the same time period or the next time period.

3. The signal generation apparatus (100) according to claim 1, wherein the signal generation controller (120) instructs the generation of the reference signal and the ultrasonic signal at a predetermined time period,
   wherein the time period includes an effective section where the reference signal and the ultrasonic signal are generated and a plurality of idle sections where the reference signal and the ultrasonic signal are not generated, and
   wherein in the case where there is a possibility of interference of the reference signal and the ultrasonic signal, the signal generation controller (120) shifts the effective section to any one of the idle sections.

4. The signal generation apparatus (100) according to claim 1 or 2, wherein if the reference signal of the different information input system is received by the reference signal reception unit (140) in an interference section including an effective section and a predetermined time section just before the effective section, the signal generation controller (120) determines that there is a possibility of interference of the reference signal and the ultrasonic signal and shifts the effective section.

5. The signal generation apparatus (100) according to claim 1, further comprising a button unit which generates button information including contact information of a button pushed by a user and at least one of contact information and pressure information which are generated when the user allows the signal generation apparatus (100) to come in contact with a writing surface, wherein the reference signal generation unit (130) generates the reference signal where the button information is further included.

6. An information input system comprising: the signal generation apparatus (100) according to any one of claims 1 to 3 and 5; and an information input apparatus (700) which measures a position of the signal generation apparatus (100) by using a reference signal and an ultrasonic signal.

7. The information input system according to claim 6, wherein the reference signal includes identification information for allowing the information input apparatus (700) to identify the signal generation apparatus (100), and wherein the information input apparatus (700) identifies the reference signal and the ultrasonic signal generated by the signal generation apparatus (100) corresponding to the information input apparatus (700) by using the identification information and measures the position of the signal generation apparatus (100).

**8.** The information input system according to claim 6, wherein the reference signal includes identification information for allowing the information input apparatus (700) to identify the signal generation apparatus (100) and length information of the effective section, and
wherein the information input apparatus (700) identifies the reference signal generated by the signal generation apparatus (100) corresponding to the information input apparatus (700) and the length of the effective section by using the identification information and the length information and measures the position of the signal generation apparatus (100) by using the ultrasonic signal received in the effective section.

**9.** An information input apparatus (700) included in an information input system which inputs information by using an ultrasonic signal and a reference signal, comprising:

an ultrasonic reception unit (730) which receives an ultrasonic signal generated by a signal generation apparatus (600);
a reference signal generation unit (720) which generates a reference signal for instructing the signal generation apparatus (600) to generate the ultrasonic signal;
a reference signal reception unit (710) which receives the reference signal; and
an information input controller (740) which instructs the generation of the reference signal at a predetermined time period including an effective section where the reference signal and the ultrasonic signal are generated and an idle section, determines the possibility of interference of the ultrasonic signal with an ultrasonic signal generated by a different information input system using the reference signal which is generated by the different information input system and received by the reference signal reception unit, and outputs a control signal for controlling generation of the reference signal to the reference signal generation unit (720) so that the ultrasonic signal generated by the signal generation apparatus (600) does not interfere with the ultrasonic signal generated by the different information input system by shifting the effective section to the idle section in the same time period or the next time period in case where there is possibility of interference.

**10.** The information input apparatus (700) according to claim 9, wherein the information input controller (740) instructs the generation of the reference signal at a predetermined time period, and in the case where there is a possibility of interference of the ultrasonic signal generated by the signal generation apparatus (600) with the ultrasonic signal generated by the different information input system, the information input controller (740) shifts the effective section where the reference signal and the ultrasonic signal are generated to an arbitrary time point in the idle section in the same time period or the next time period.

**11.** The information input apparatus (700) according to claim 9, wherein the information input controller (740) instructs the generation of the reference signal at a predetermined time period, wherein the time period includes an effective section where the reference signal and the ultrasonic signal are generated and a plurality of idle sections where the reference signal and the ultrasonic signal are not generated, and wherein in the case where there is a possibility of interference of the ultrasonic signal, the information input controller (740) shifts the effective section to any one of the idle sections.

**12.** The information input apparatus (700) according to claim 10 or 11, wherein if the reference signal of the different information input system is received by the reference signal reception unit (710) in an interference section including the effective section or a predetermined time section just before the effective section, the information input controller (740) determines that there is a possibility of interference of the ultrasonic signal and shifts the effective section.

**13.** The information input apparatus (700) according to claim 9, further comprising an information input unit which measures the position of the signal generation apparatus (600) by using a time difference between a generation time of the reference signal generated by the reference signal generation unit (720) and a reception time of the ultrasonic signal generated by the signal generation apparatus (600) and received by the ultrasonic reception unit (730) and generates position information.

**14.** An information input system comprising:

the information input apparatus (700) according to any one of claims 9 to 11 and 13; and
a signal generation apparatus (600) which receives a reference signal from the information input apparatus (700) and generates an ultrasonic signal.

**15.** An information input system according to claim 14, wherein the reference signal includes identification information, and
wherein the signal generation apparatus (600) determines the reference signal generated by the information input apparatus (700) corresponding to the signal generation apparatus (600) by using the identification information and generates the ultrasonic signal.

16. The information input system according to claim 14, wherein the reference signal includes identification information and length information of an effective section, and
wherein the signal generation apparatus (600) determines the reference signal generated by the information input apparatus (700) corresponding to the signal generation apparatus (600) and a length of the effective section by using the identification information and generates the ultrasonic signal in the effective section.

17. The information input system according to claim 14, wherein a plurality of the signal generation apparatuses (600) are present,
wherein the reference signal includes any one of pieces of identification information allocated to the signal generation apparatuses (600), and
wherein the signal generation apparatus (600) generates the ultrasonic signal in an effective section where the reference signal including the identification information allocated to the signal generation apparatus (600) is received.

18. An information input method performed by an information input system which inputs information by using a reference signal and an ultrasonic signal, comprising steps of:

(a) in a signal generation apparatus (100), shifting the reference signal and the ultrasonic signal at a predetermined time period including an effective section where the reference signal and the ultrasonic signal are generated and an idle section, receiving a reference signal of a different information input system, and determining whether or not there is a possibility of signal interference;
(b) in the signal generation apparatus (100), shifting the effective section to the idle section in the same time period or the next time period in the case where there is a possibility of signal interference; and
(c) after the signal generation apparatus (100) shifts the effective section, repetitively performing the steps (a) and (b).

19. The information input method according to claim 18, wherein in the step (b), the effective section is shifted to an arbitrary time point in the idle section in the same time period or the next time period.

20. The information input method according to claim 18, wherein in the step (a), if the reference signal of the different information input system is received in an interference section including an effective section and a predetermined time section just before the effective section, it is determined that there is a possibility of interference of the reference signal and the ultrasonic signal.

21. An information input method using a reference signal and an ultrasonic signal in an information input system including an information input apparatus (700) which generates the reference signal at a predetermined time period including an effective section where the reference signal is generated by the information input apparatus (700) and the ultrasonic signal is generated by a signal generation apparatus (600) and an idle section, and the signal generation apparatus (600) which receives the reference signal and generates the ultrasonic signal, comprising steps of:

(a) in the information input apparatus (700), receiving a reference signal generated by a different information input system and determines whether or not there is a possibility of interference of the ultrasonic signal generated by the signal generation apparatus (600) corresponding to the information input apparatus (700) with an ultrasonic signal generated by the different information input system;
(b) in the case where it is determined that there is a possibility of interference, in the information input apparatus (700), shifting the effective section to the idle section in the same time period or the next time period; and
(c) in the information input apparatus (700), generating a reference signal in the shifted effective section, measuring a position of the signal generation apparatus (600) by using the ultrasonic signal received from the signal generation apparatus (600) in the same effective section, and inputting information.

22. The information input method according to claim 21, wherein in step (a), if the reference signal of the different information input system is received in an interference section including the effective section or a predetermined time section just before the effective section, it is determined that there is a possibility of interference of the ultrasonic signal or the reference signal.

23. The information input method according to claim 21, wherein in step (b), the effective section is shifted to an arbitrary time point in the idle section in the same time period or the next time period.

24. The information input method according to claim 21, wherein the time period includes the effective section and a plurality of idle sections, and

wherein in step (b), the effective section is shifted to the idle section by a predetermined time section.

25. The information input method according to claim 21, wherein the reference signal includes identification information, and
wherein in step (c), the signal generation apparatus (600) determines the reference signal generated by the information input apparatus (700) corresponding to the signal generation apparatus (600) by using the identification information and generates the ultrasonic signal.

26. The information input method according to claim 21, wherein the reference signal includes identification information and length information of the effective section, and
wherein in step (c), the signal generation apparatus (600) determines the reference signal generated by the signal generation apparatus (600) corresponding to the information input apparatus (700) and a length of the effective section by using the identification information and generates the ultrasonic signal in the effective section.

27. The information input method according to any one of claims 21 to 26, wherein the information input system includes a plurality of the signal generation apparatuses (600), and
wherein in step (c), the information input apparatus (700) generates the reference signal including the identification information allocated to each of the signal generation apparatuses (600) in the effective section allocated to each of the signal generation apparatuses (600) and measures a position of each of the signal generation apparatuses (600) by using the ultrasonic signal received in the effective section allocated to each of the signal generation apparatuses (600).

**Patentansprüche**

1. Signalerzeugungsvorrichtung (100), enthalten in einem Informationseingabesystem, welches Informationen eingibt unter Verwendung eines Referenzsignals und eines Ultraschallsignals, umfassend:

eine Referenzsignalerzeugungseinheit (130), welche das Referenzsignal erzeugt;
eine Ultraschallerzeugungseinheit (110), welche das Ultraschallsignal erzeugt;
eine Referenzsignalempfangseinheit (140), welche das Referenzsignal empfängt; und
eine Signalerzeugungssteuerung (120), welche die Erzeugung des Referenzsignals und des Ultraschallsignals mit einer vorbestimmten Zeitspanne anweist, einschließend einen Wirkabschnitt, in welchem das Referenzsignal und das Ultraschallsignal erzeugt werden, sowie einen Leerlauf-Abschnitt, und welche die Möglichkeit einer Interferenz des Referenzsignals und des Ultraschallsignals mit einem Referenzsignal und einem Ultraschallsignal, erzeugt durch ein anderes Informationseingabesystem, feststellt unter Verwendung des Referenzsignals, welches erzeugt wird durch das andere Informationseingabesystem und empfangen wird durch die Referenzsignalempfangseinheit (140), und welche ein Steuersignal zur Steuerung der Erzeugung des Referenzsignals und des Ultraschallsignals an die Referenzsignalerzeugungseinheit (130) und die Ultraschallerzeugungseinheit (110) ausgibt, sodass das Referenzsignal und das Ultraschallsignal, erzeugt durch die Signalerzeugungsvorrichtung (100), nicht mit dem Referenzsignal und dem Ultraschallsignal interferieren, welche erzeugt wurden durch das andere Informationseingabesystem, durch Verschieben des Wirkabschnitts zum Leerlauf-Abschnitt in der gleichen Zeitspanne oder in der nächsten Zeitspanne, falls die Möglichkeit einer Interferenz besteht.

2. Die Signalerzeugungsvorrichtung (100) nach Anspruch 1, wobei die Signalerzeugungssteuerung (120) die Erzeugung des Referenzsignals und des Ultraschallsignals mit einer vorbestimmten Zeitspanne anweist, und in dem Fall, in welchem eine Möglichkeit besteht einer Interferenz des Referenzsignals und des Ultraschallsignals mit dem Referenzsignal und dem Ultraschallsignal, welche erzeugt werden durch das andere Informationseingabesystem, die Signalerzeugungssteuerung (120) einen Wirkabschnitt, in welchem das Referenzsignal und das Ultraschallsignal erzeugt werden, verschiebt auf einen willkürlichen Zeitpunkt in einem Leerlauf-Abschnitt in der gleichen Zeitspanne oder in der nächsten Zeitspanne.

3. Die Signalerzeugungsvorrichtung (100) nach Anspruch 1, wobei die Signalerzeugungssteuerung (120) die Erzeugung des Referenzsignals und des Ultraschallsignals mit einer vorbestimmten Zeitspanne anweist,
wobei die Zeitspanne einen Wirkabschnitt einschließt, in welchem das Referenzsignal und das Ultraschallsignal erzeugt werden, sowie eine Vielzahl von Leerlauf-Abschnitten, in welchen das Referenzsignal und das Ultraschallsignal nicht erzeugt werden, und
wobei in dem Fall, in welchem eine Möglichkeit einer Interferenz des Referenzsignals und des Ultraschallsignals besteht, die Signalerzeugungssteuerung (120) den Wirkabschnitt zu einem der Leerlauf-Abschnitte verschiebt.

4. Die Signalerzeugungsvorrichtung (100) nach Anspruch 1 oder 2, wobei, falls das Referenzsignal des anderen Informationseingabesystems empfangen wird von der Referenzsignalempfangseinheit (140) in einem Interferenzabschnitt, einschließend einen Wirkabschnitt und einen vorbestimmten Zeitabschnitt unmittelbar vor dem Wirkabschnitt, die Signalerzeugungssteuerung (120) feststellt, dass eine Möglichkeit einer Interferenz des Referenzsignals und des Ultraschallsignals besteht und den Wirkabschnitt verschiebt.

5. Die Signalerzeugungsvorrichtung (100) nach Anspruch 1, ferner umfassend eine Tasteneinheit, welche Tasteninformationen erzeugt, einschließend Kontaktinformationen einer von einem Anwender gedrückten Taste, und wenigstens eines aus einer Kontaktinformation und einer Druckinformation, welche erzeugt werden, wenn der Anwender es der Signalerzeugungsvorrichtung (100) erlaubt, mit einer Schreiboberfläche in Kontakt zu kommen, wobei die Referenzsignalerzeugungseinheit (130) das Referenzsignal erzeugt, in welchem ferner die Tasteninformation eingeschlossen ist.

6. Informationseingabesystem, umfassend: die Signalerzeugungsvorrichtung (100) nach einem der Ansprüche 1 bis 3 und 5; sowie eine Informationseingabevorrichtung (700), welche eine Position der Signalerzeugungsvorrichtung (100) erfasst durch Verwendung eines Referenzsignals und eines Ultraschallsignals.

7. Das Informationseingabesystem nach Anspruch 6, wobei das Referenzsignal Identifikationsinformationen einschließt, um es der Informationseingabevorrichtung (700) zu erlauben, die Signalerzeugungsvorrichtung (100) zu identifizieren, und wobei die Informationseingabevorrichtung (700) das Referenzsignal und das Ultraschallsignal, erzeugt von der Signalerzeugungsvorrichtung (100) und zugeordnet der Informationseingabevorrichtung (700), identifiziert durch Verwendung der Identifikationsinformationen und die Position der Signalerzeugungsvorrichtung (100) erfasst.

8. Das Informationseingabesystem nach Anspruch 6, wobei das Referenzsignal Identifikationsinformationen einschließt, um es der Informationseingabevorrichtung (700) zu erlauben, die Signalerzeugungsvorrichtung (100) und Längeninformationen des Wirkabschnitts zu identifizieren, und wobei die Informationseingabevorrichtung (700) das Referenzsignal, erzeugt durch die Signalerzeugungsvorrichtung (100) und zugeordnet der Informationseingabevorrichtung (700), sowie die Länge des Wirkabschnitts identifiziert durch Verwendung der Identifikationsinformationen und der Längeninformationen und die Position der Signalerzeugungsvorrichtung (100) erfasst durch Verwendung des Ultraschallsignals, welches im Wirkabschnitt empfangen wurde.

9. Informationseingabevorrichtung (700), enthalten in einem Informationseingabesystem, welches Informationen eingibt unter Verwendung eines Ultraschallsignals und eines Referenzsignals, umfassend:

   eine Ultraschallempfangseinheit (730), welche ein Ultraschallsignal empfängt, das erzeugt wurde durch eine Signalerzeugungsvorrichtung (600);
   eine Referenzsignalerzeugungseinheit (720), welche ein Referenzsignal erzeugt, um die Signalerzeugungsvorrichtung (600) anzuweisen, das Ultraschallsignal zu erzeugen;
   eine Referenzsignalempfangseinheit (710), welche das Referenzsignal empfängt; und
   eine Informationseingabesteuerung (740), welche die Erzeugung des Referenzsignals anweist mit einer vorbestimmten Zeitspanne, einschließend einen Wirkabschnitt, in welchem das Referenzsignal und das Ultraschallsignal erzeugt werden, sowie einen Leerlauf-Abschnitt, die Möglichkeit einer Interferenz des Ultraschallsignals mit einem Ultraschallsignal feststellt, welches erzeugt wurde durch ein anderes Informationseingabesystem, durch Verwendung des Referenzsignals, welches erzeugt wurde durch das andere Informationseingabesystem und empfangen wurde durch die Referenzsignalempfangseinheit, und ein Steuersignal an die Referenzsignalerzeugungseinheit (720) ausgibt zur Steuerung der Erzeugung des Referenzsignals, sodass das von der Signalerzeugungsvorrichtung (600) erzeugte Ultraschallsignal nicht mit dem von dem anderen Informationseingabesystem erzeugten Ultraschallsignal interferiert, durch Verschieben des Wirkabschnitts zum Leerlauf-Abschnitt in der gleichen Zeitspanne oder in der nächsten Zeitspanne, falls die Möglichkeit einer Interferenz besteht.

10. Die Informationseingabevorrichtung (700) nach Anspruch 9, wobei die Informationseingabesteuerung (740) die Erzeugung des Referenzsignals mit einer vorbestimmten Zeitspanne anweist, und im Falle, in welchem die Möglichkeit besteht einer Interferenz des von der Signalerzeugungsvorrichtung (600) erzeugten Ultraschallsignals mit dem von dem anderen Informationseingabesystem erzeugten Ultraschallsignal, die Informationseingabesteuerung (740) den Wirkabschnitt, in welchem das Referenzsignal und das Ultraschallsignal erzeugt werden, verschiebt zu einem willkürlichen Zeitpunkt im Leerlauf-Abschnitt in der gleichen Zeitspanne oder in der nächsten Zeitspanne.

11. Die Informationseingabevorrichtung (700) nach Anspruch 9, wobei die Informationseingabesteuerung (740) die Erzeugung des Referenzsignals mit einer vorbestimmten Zeitspanne anweist, wobei die Zeitspanne einen Wirkabschnitt einschließt, in welchem das Referenzsignal und das Ultraschallsignal erzeugt werden, sowie eine Vielzahl von Leerlauf-Abschnitten, in welchen das Referenzsignal und das Ultraschallsignal nicht erzeugt werden, und wobei im Falle, in welchem die Möglichkeit einer Interferenz des Ultraschallsignals besteht, die Informationseingabesteuerung (740) den Wirkabschnitt zu einem der Leerlauf-Abschnitte verschiebt.

12. Die Informationseingabevorrichtung (700) nach Anspruch 10 oder 11, wobei, falls das Referenzsignal des anderen Informationseingabesystems empfangen wird von der Referenzsignalempfangseinheit (710) in einem Interferenzabschnitt, einschließend den Wirkabschnitt oder einen vorbestimmten Zeitabschnitt unmittelbar vor dem Wirkabschnitt, die Informationseingabesteuerung (740) feststellt, dass eine Möglichkeit einer Interferenz des Ultraschallsignals besteht und den Wirkabschnitt verschiebt.

13. Die Informationseingabevorrichtung (700) nach Anspruch 9, ferner umfassend eine Informationseingabeeinheit, welche die Position der Signalerzeugungsvorrichtung (600) erfasst durch Verwendung eines Zeitunterschieds zwischen einer Erzeugungszeit des von der Referenzsignalerzeugungseinheit (720) erzeugten Referenzsignals und einer Empfangszeit des von der Signalerzeugungsvorrichtung (600) erzeugten und von der Ultraschallempfangseinheit (730) empfangenen Ultraschallsignals und Positionsinformationen erzeugt.

14. Informationseingabesystem, umfassend:

    die Informationseingabevorrichtung (700) nach einem der Ansprüche 9 bis 11 und 13; und eine Signalerzeugungsvorrichtung (600), welche ein Referenzsignal von der Informationseingabevorrichtung (700) empfängt und ein Ultraschallsignal erzeugt.

15. Informationseingabesystem nach Anspruch 14, wobei das Referenzsignal Identifikationsinformationen einschließt, und wobei die Signalerzeugungsvorrichtung (600) das Referenzsignal, bestimmt von der Informationseingabevorrichtung (700) und zugeordnet der Signalerzeugungsvorrichtung (600), durch Verwendung der Identifikationsinformationen bestimmt und das Ultraschallsignal erzeugt.

16. Das Informationseingabesystem nach Anspruch 14, wobei das Referenzsignal Identifikationsinformationen und Längeninformationen eines Wirkabschnitts einschließt, und wobei die Signalerzeugungsvorrichtung (600) das Referenzsignal, erzeugt von der Informationseingabevorrichtung (700) und zugeordnet der Signalerzeugungsvorrichtung (600), sowie eine Länge des Wirkabschnitts unter Verwendung der Identifikationsinformationen bestimmt und das Ultraschallsignal im Wirkabschnitt erzeugt.

17. Das Informationseingabesystem nach Anspruch 14, wobei eine Vielzahl der Signalerzeugungsvorrichtungen (600) vorhanden ist, wobei das Referenzsignal jeweils Daten der Identifikationsinformationen einschließt, welche den Signalerzeugungsvorrichtungen (600) zugewiesen sind, und wobei die Signalerzeugungsvorrichtung (600) das Ultraschallsignal in einem Wirkabschnitt erzeugt, in welchem das Referenzsignal, einschließend die Identifikationsinformationen, die der Signalerzeugungsvorrichtung (600) zugewiesen sind, empfangen wird.

18. Informationseingabeverfahren, durchgeführt von einem Informationseingabesystem, welches Informationen eingibt unter Verwendung eines Referenzsignals und eines Ultraschallsignals, umfassend die Schritte:

    (a) in einer Signalerzeugungsvorrichtung (100) das Erzeugen des Referenzsignals und des Ultraschallsignals mit einer vorbestimmten Zeitspanne, einschließend einen Wirkabschnitt, in welchem das Referenzsignal und das Ultraschallsignal erzeugt werden, sowie einen Leerlauf-Abschnitt, Empfangen eines Referenzsignals eines anderen Informationseingabesystems und Feststellen, ob die Möglichkeit einer Signalinterferenz besteht oder nicht;
    (b) in der Signalerzeugungsvorrichtung (100) das Verschieben des Wirkabschnitts zum Leerlauf-Abschnitt in der gleichen Zeitspanne oder in der nächsten Zeitspanne, falls die Möglichkeit einer Signalinterferenz besteht; und
    (c) das wiederholte Durchführen der Schritte (a) und (b), nachdem die Signalerzeugungsvorrichtung (100) den Wirkabschnitt verschoben hat.

19. Das Informationseingabeverfahren nach Anspruch 18, wobei im Schritt (b) der Wirkabschnitt verschoben wird zu einem willkürlichen Zeitpunkt im Leerlauf-Abschnitt in der gleichen Zeitspanne oder in der nächsten Zeitspanne.

20. Das Informationseingabeverfahren nach Anspruch 18, wobei im Schritt (a), falls das Referenzsignal des anderen Informationseingabesystems empfangen wird in einem Interferenzabschnitt, einschließend einen Wirkabschnitt und einen vorbestimmten Zeitabschnitt unmittelbar vor dem Wirkabschnitt, festgestellt wird, dass eine Möglichkeit der Interferenz des Referenzsignals und des Ultraschallsignals besteht.

21. Informationseingabeverfahren unter Verwendung eines Referenzsignals und eines Ultraschallsignals in einem Informationseingabesystem, einschließend eine Informationseingabevorrichtung (700), welche das Referenzsignal mit einer vorbestimmten Zeitspanne erzeugt, einschließend einen Wirkabschnitt, in welchem das Referenzsignal durch die Informationseingabevorrichtung (700) erzeugt wird und das Ultraschallsignal durch eine Signalerzeugungsvorrichtung (600) erzeugt wird, und einen Leerlauf-Abschnitt sowie die Signalerzeugungsvorrichtung (600), welche das Referenzsignal empfängt und das Ultraschallsignal erzeugt, umfassend die Schritte:

> (a) in der Informationseingabevorrichtung (700) das Empfangen eines durch ein anderes Informationseingabesystem erzeugten Referenzsignals und Feststellen, ob die Möglichkeit besteht, oder nicht besteht, einer Interferenz des Ultraschallsignals, erzeugt von der Signalerzeugungsvorrichtung (600) und zugeordnet der Informationseingabevorrichtung (700), mit einem Ultraschallsignal, welches durch das andere Informationseingabesystem erzeugt wurde;
> (b) im Falle, in welchem in der Informationseingabevorrichtung (700) festgestellt worden ist, dass die Möglichkeit einer Interferenz besteht, das Verschieben des Wirkabschnitts zum Leerlauf-Abschnitt in der gleichen Zeitspanne oder in der nächsten Zeitspanne; und
> (c) in der Informationseingabevorrichtung (700) das Erzeugen eines Referenzsignals im verschobenen Wirkabschnitt, Erfassen einer Position der Signalerzeugungsvorrichtung (600) durch Verwendung des Ultraschallsignals, welches empfangen wurde von der Signalerzeugungsvorrichtung (600) im gleichen Wirkabschnitt, sowie das Eingeben der Informationen.

22. Das Informationseingabeverfahren nach Anspruch 21, wobei in Schritt (a), falls das Referenzsignal des anderen Informationseingabesystems empfangen wird in einem Interferenzabschnitt, einschließend den Wirkabschnitt oder einen vorbestimmten Zeitabschnitt unmittelbar vor dem Wirkabschnitt, festgestellt wird, dass eine Möglichkeit einer Interferenz des Ultraschallsignals oder des Referenzsignals besteht.

23. Das Informationseingabeverfahren nach Anspruch 21, wobei in Schritt (b) der Wirkabschnitt verschoben wird zu einem willkürlichen Zeitpunkt im Leerlauf-Abschnitt in der gleichen Zeitspanne oder in der nächsten Zeitspanne.

24. Das Informationseingabeverfahren nach Anspruch 21, wobei die Zeitspanne den Wirkabschnitt und eine Vielzahl von Leerlauf-Abschnitten einschließt, und wobei in Schritt (b) der Wirkabschnitt um einen vorbestimmten Zeitabschnitt in den Leerlauf-Abschnitt verschoben wird.

25. Das Informationseingabeverfahren nach Anspruch 21,
wobei das Referenzsignal Identifikationsinformationen einschließt, und wobei in Schritt (c) die Signalerzeugungsvorrichtung (600) das Referenzsignal, erzeugt durch die Informationseingabevorrichtung (700) und zugeordnet der Signalerzeugungsvorrichtung (600), durch Verwendung der Identifikationsinformationen bestimmt und das Ultraschallsignal erzeugt.

26. Das Informationseingabeverfahren nach Anspruch 21,
wobei das Referenzsignal Identifikationsinformationen und Längeninformationen des Wirkabschnitts einschließt, und
wobei in Schritt (c) die Signalerzeugungsvorrichtung (600) das Referenzsignal, erzeugt durch die Signalerzeugungsvorrichtung (600) und zugeordnet der Informationseingabevorrichtung (700), sowie eine Länge des Wirkabschnitts durch Verwendung der Identifikationsinformationen bestimmt und das Ultraschallsignal im Wirkabschnitt erzeugt.

27. Das Informationseingabeverfahren nach einem der Ansprüche 21 bis 26, wobei das Informationseingabesystem eine Vielzahl der Signalerzeugungsvorrichtungen (600) einschließt, und
wobei in Schritt (c) die Informationseingabevorrichtung (700) das Referenzsignal erzeugt, einschließend die Identifikationsinformationen, welche jeder Signalerzeugungsvorrichtung (600) zugewiesen wurden, in jedem der Wirkabschnitte, welche den Signalerzeugungsvorrichtungen (600) zugewiesen wurden, und eine Position jeder der Signalerzeugungsvorrichtungen (600) erfasst durch Verwendung des Ultraschallsignals, empfangen im Wirkabschnitt, welcher jeder der Signalerzeugungsvorrichtungen (600) zugewiesen wurde.

**Revendications**

1. Appareil de génération de signaux (100) inclus dans un système d'entrée d'informations qui entre des informations à l'aide d'un signal de référence et d'un signal ultrasonore, comprenant :

une unité de génération de signal de référence (130) qui génère le signal de référence ;

une unité de génération de signal ultrasonore (110) qui génère le signal ultrasonore ;

une unité de réception de signal de référence (140) qui reçoit le signal de référence ; et

un contrôleur de génération de signaux (120) qui ordonne la génération du signal de référence et du signal ultrasonore durant une période de temps prédéterminée incluant une section effective, dans laquelle le signal de référence et le signal ultrasonore sont générés, et une section inactive, et qui détermine la possibilité d'interférences du signal de référence et du signal ultrasonore avec un signal de référence et un signal ultrasonore générés par un système d'entrée d'informations différent à l'aide du signal de référence qui est généré par le système d'entrée d'informations différent et reçu par l'unité de réception de signal de référence (140), et qui délivre un signal de commande pour commander la génération du signal de référence et du signal ultrasonore à l'unité de génération de signal de référence (130) et à l'unité de génération de signal ultrasonore (110) de sorte que le signal de référence et le signal ultrasonore générés par l'appareil de génération de signaux (100) n'interfèrent pas avec le signal de référence et le signal ultrasonore générés par le système d'entrée d'informations différent par le biais d'un décalage de la section effective vers la section inactive au cours de la même période de temps ou de la prochaine période de temps dans le cas où il y a une possibilité d'interférences.

2. Appareil de génération de signaux (100) selon la revendication 1, dans lequel le contrôleur de génération de signaux (120) ordonne la génération du signal de référence et du signal ultrasonore durant une période de temps prédéterminée, et dans le cas où il y a une possibilité d'interférences du signal de référence et du signal ultrasonore avec le signal de référence et le signal ultrasonore générés par le système d'entrée d'informations différent, le contrôleur de génération de signaux (120) décale une section effective, dans laquelle le signal de référence et le signal ultrasonore sont générés, à un instant temporel arbitraire dans une section inactive au cours de la même période de temps ou de la prochaine période de temps.

3. Appareil de génération de signaux (100) selon la revendication 1, dans lequel le contrôleur de génération de signaux (120) ordonne la génération du signal de référence et du signal ultrasonore durant une période de temps prédéterminée,

dans lequel la période de temps inclut une section effective, dans laquelle le signal de référence et le signal ultrasonore sont générés, et une pluralité de sections inactives dans lesquelles le signal de référence et le signal ultrasonore ne sont pas générés, et dans lequel, dans le cas où il y a une possibilité d'interférences du signal de référence et du signal ultrasonore, le contrôleur de génération de signaux (120) décale la section effective vers une des sections inactives.

4. Appareil de génération de signaux (100) selon la revendication 1 ou 2, dans lequel si le signal de référence du système d'entrée d'informations différent est reçu par l'unité de réception de signal de référence (140) dans une section d'interférences incluant une section effective et une section temporelle prédéterminée juste avant la section effective, le contrôleur de génération de signaux (120) détermine qu'il y a une possibilité d'interférences du signal de référence et du signal ultrasonore, et décale la section effective.

5. Appareil de génération de signaux (100) selon la revendication 1, comprenant en outre une unité bouton qui génère des informations de bouton incluant des informations de contact d'un bouton pressé par un utilisateur et des informations de contact et/ou des informations de pression qui sont générées lorsque l'utilisateur permet à l'appareil de génération de signaux (100) de venir en contact avec une surface d'écriture, l'unité de génération de signal de référence (130) générant le signal de référence dans lequel sont également incluses les informations de bouton.

6. Système d'entrée d'informations comprenant :

l'appareil de génération de signaux (100) selon l'une quelconque des revendications 1 à 3 et 5 ; et un appareil d'entrée d'informations (700) qui mesure une position de l'appareil de génération de signaux (100) à l'aide d'un signal de référence et d'un signal ultrasonore.

7. Système d'entrée d'informations selon la revendication 6, dans lequel le signal de référence inclut des informations d'identification pour permettre à l'appareil d'entrée d'informations (700) d'identifier l'appareil de génération de signaux (100) et dans lequel l'appareil d'entrée d'informations (700) identifie le signal de référence et le signal ultrasonore générés par l'appareil de génération de signaux (100) correspondant à l'appareil d'entrée d'informations (700) à l'aide des informations d'identification et mesure la position de l'appareil de génération de signaux (100).

8. Système d'entrée d'informations selon la revendication 6, dans lequel le signal de référence inclut des informations d'identification pour permettre à l'appareil d'entrée d'informations (700) d'identifier l'appareil de génération de signaux (100) et des informations de longueur de la section effective, et

dans lequel l'appareil d'entrée d'informations (700) identifie le signal de référence généré par l'appareil de génération de signaux (100) correspondant à l'appareil d'entrée d'informations (700) et la longueur de la section effective à l'aide des informations d'identification et des informations de longueur, et mesure la position de l'appareil de génération de signaux (100) à l'aide du signal ultrasonore reçu dans la section effective.

9. Appareil d'entrée d'informations (700) inclus dans un système d'entrée d'informations qui entre des informations à l'aide d'un signal ultrasonore et d'un signal de référence, comprenant :

une unité de réception ultrasonore (730) qui reçoit un signal ultrasonore généré par un appareil de génération de signaux (600) ;
une unité de génération de signal de référence (720) qui génère un signal de référence pour ordonner à l'appareil de génération de signaux (600) de générer le signal ultrasonore ;
une unité de réception de signal de référence (710) qui reçoit le signal de référence ; et
un contrôleur d'entrée d'informations (740) qui ordonne la génération du signal de référence durant une période de temps prédéterminée incluant une section effective, dans laquelle le signal de référence et le signal ultrasonore sont générés, et une section inactive, détermine la possibilité d'interférences du signal ultrasonore avec un signal ultrasonore généré par un système d'entrée d'informations différent à l'aide du signal de référence qui est généré par le système d'entrée d'informations différent et reçu par l'unité de réception de signal de référence, et délivre un signal de commande pour commander la génération du signal de référence à l'unité de génération de signal de référence (720) de sorte que le signal ultrasonore généré par l'appareil de génération de signaux (600) n'interfère pas avec le signal ultrasonore généré par le système d'entrée d'informations différent par le biais d'un décalage de la section effective vers la section inactive au cours de la même période de temps ou de la prochaine période de temps dans le cas où il y a une possibilité d'interférences.

10. Appareil d'entrée d'informations (700) selon la revendication 9, dans lequel le contrôleur d'entrée d'informations (740) ordonne la génération du signal de référence durant une période de temps prédéterminée et, dans le cas où il y a une possibilité d'interférences du signal ultrasonore généré par l'appareil de génération de signaux (600) avec le signal ultrasonore généré par le système d'entrée d'informations différent, le contrôleur d'entrée d'informations (740) décale la section effective dans laquelle le signal de référence et le signal ultrasonore sont générés vers un instant temporel arbitraire dans la section inactive au cours de la même période de temps ou de la prochaine période de temps.

11. Appareil d'entrée d'informations (700) selon la revendication 9, dans lequel le contrôleur d'entrée d'informations (740) ordonne la génération du signal de référence durant une période de temps prédéterminée, dans lequel la période de temps inclut une section effective, dans laquelle le signal de référence et le signal ultrasonore sont générés, et une pluralité de sections inactives dans lesquelles le signal de référence et le signal ultrasonore ne sont pas générés, et

dans lequel, dans le cas où il y a une possibilité d'interférences du signal ultrasonore, le contrôleur d'entrée d'informations (740) décale la section effective vers l'une quelconque des sections inactives.

12. Appareil d'entrée d'informations (700) selon la revendication 10 ou 11, dans lequel si le signal de référence du système d'entrée d'informations différent est reçu par l'unité de réception de signal de référence (710) dans une section d'interférences incluant la section effective ou une section temporelle prédéterminée juste avant la section effective, le contrôleur d'entrée d'informations (740) détermine qu'il y a une possibilité d'interférences du signal ultrasonore et décale la section effective.

13. Appareil d'entrée d'informations (700) selon la revendication 9, comprenant en outre une unité d'entrée d'informations qui mesure la position de l'appareil de génération de signaux (600) à l'aide d'une différence de temps entre un temps de génération du signal de référence généré par l'unité de génération de signal de référence (720) et un temps de réception du signal ultrasonore généré par l'appareil de génération de signaux (600) et reçu par l'unité de réception ultrasonore (730), et génère des informations de position.

14. Système d'entrée d'informations comprenant :

l'appareil d'entrée d'informations (700) selon l'une quelconque des revendications 9 à 11 et 13 ; et
un appareil de génération de signaux (600) qui reçoit un signal de référence en provenance de l'appareil d'entrée d'informations (700) et génère un signal ultrasonore.

**15.** Système d'entrée d'informations selon la revendication 14, dans lequel le signal de référence inclut des informations d'identification, et
dans lequel l'appareil de génération de signaux (600) détermine le signal de référence généré par l'appareil d'entrée d'informations (700) correspondant à l'appareil de génération de signaux (600) à l'aide des informations d'identification et génère le signal ultrasonore.

**16.** Système d'entrée d'informations selon la revendication 14,
dans lequel le signal de référence inclut des informations d'identification et des informations de longueur d'une section effective, et
dans lequel l'appareil de génération de signaux (600) détermine le signal de référence généré par l'appareil d'entrée d'informations (700) correspondant à l'appareil de génération de signaux (600) et une longueur de la section effective à l'aide des informations d'identification et génère le signal ultrasonore dans la section effective.

**17.** Système d'entrée d'informations selon la revendication 14,
dans lequel une pluralité des appareils de génération de signaux (600) sont présents,
dans lequel le signal de référence inclut l'un quelconque des éléments d'informations d'identification allouées aux appareils de génération de signaux (600), et
dans lequel l'appareil de génération de signaux (600) génère le signal ultrasonore dans une section effective dans laquelle le signal de référence incluant les informations d'identification allouées à l'appareil de génération de signaux (600) est reçu.

**18.** Procédé d'entrée d'informations réalisé par un système d'entrée d'informations qui entre des informations à l'aide d'un signal de référence et d'un signal ultrasonore, comprenant les étapes suivantes :

(a) dans un appareil de génération de signaux (100), génération du signal de référence et du signal ultrasonore durant une période de temps prédéterminée comprenant une section effective, dans laquelle le signal de référence et le signal ultrasonore sont générés, et une section inactive, réception d'un signal de référence d'un système d'entrée d'informations différent, et détermination s'il y a ou non une possibilité d'interférences de signaux ;
(b) dans l'appareil de génération de signaux (100), décalage de la section effective vers la section inactive au cours de la même période de temps ou de la prochaine période de temps dans le cas où il y a une possibilité d'interférences de signaux ; et

(c) après que l'appareil de génération de signaux (100) decalé la section effective, exécution répétitive des étapes (a) et (b).

**19.** Procédé d'entrée d'informations selon la revendication 18, dans lequel, à l'étape (b), la section effective est décalée vers un instant temporel arbitraire dans la section inactive au cours de la même période de temps ou de la prochaine période de temps.

**20.** Procédé d'entrée d'informations selon la revendication 18, dans lequel, à l'étape (a), si le signal de référence du système d'entrée d'informations différent est reçu dans une section d'interférences incluant une section effective et une section temporelle prédéterminée juste avant la section effective, il est déterminé qu'il y a une possibilité d'interférence du signal de référence et du signal ultrasonore.

**21.** Procédé d'entrée d'informations à l'aide d'un signal de référence et d'un signal ultrasonore dans un système d'entrée d'informations incluant un appareil d'entrée d'informations (700) qui génère le signal de référence durant une période de temps prédéterminée incluant une section effective, dans laquelle le signal de référence est généré par l'appareil d'entrée d'informations (700) et le signal ultrasonore est généré par un appareil de génération de signaux (600), et une section inactive, et l'appareil de génération de signaux (600) qui reçoit le signal de référence et génère le signal ultrasonore, comprenant les étapes suivantes :

(a) dans l'appareil d'entrée d'informations (700), réception d'un signal de référence généré par un système d'entrée d'informations différent et détermination s'il y a ou non une possibilité d'interférences du signal ultrasonore, généré par l'appareil de génération de signaux (600) correspondant à l'appareil d'entrée d'informations (700), avec un signal ultrasonore généré par le système d'entrée d'informations différent ;
(b) dans le cas où il est déterminé qu'il y a une possibilité d'interférences, dans l'appareil d'entrée d'informations (700), décalage de la section effective vers la section inactive au cours de la même période de temps ou de la prochaine période de temps ; et
(c) dans l'appareil d'entrée d'informations (700), génération d'un signal de référence dans la section effective décalée, mesure d'une position de l'appareil de génération de signaux (600) à l'aide du signal ultrasonore reçu de l'appareil de génération de signaux (600) dans la même section effective, et entrée des informations.

**22.** Procédé d'entrée d'informations selon la revendication 21, dans lequel, à l'étape (a), si le signal de référence du système d'entrée d'informations différent est reçu dans une section d'interférences incluant la section effective ou une section temporelle prédéterminée juste avant la section effective, il est déterminé qu'il y a une possibilité d'interférences du signal ultrasonore ou du signal de référence.

23. Procédé d'entrée d'informations selon la revendication 21, dans lequel, à l'étape (b), la section effective est décalée vers un instant temporel arbitraire dans la section inactive au cours de la même période de temps ou de la prochaine période de temps.

24. Procédé d'entrée d'informations selon la revendication 21, dans lequel la période de temps inclut la section effective et une pluralité de sections inactives, et
dans lequel, à l'étape (b), la section effective est décalé vers la section inactive par une section temporelle prédéterminée.

25. Procédé d'entrée d'informations selon la revendication 21, dans lequel le signal de référence inclut des informations d'identification, et
dans lequel, à l'étape (c), l'appareil de génération de signaux (600) détermine le signal de référence généré par l'appareil d'entrée d'informations (700) correspondant à l'appareil de génération de signaux (600) à l'aide des informations d'identification et génère le signal ultrasonore.

26. Procédé d'entrée d'informations selon la revendication 21,
dans lequel le signal de référence inclut des informations d'identification et des informations de longueur de la section effective, et
dans lequel, à l'étape (c), l'appareil de génération de signaux (600) détermine le signal de référence généré par l'appareil de génération de signaux (600) correspondant à l'appareil d'entrée d'informations (700) et une longueur de la section effective à l'aide des informations d'identification, et génère le signal ultrasonore dans la section effective.

27. Procédé d'entrée d'informations selon l'une quelconque des revendications 21 à 26, dans lequel le système d'entrée d'informations inclut une pluralité d'appareils de génération de signaux (600), et
dans lequel, à l'étape (c), l'appareil d'entrée d'informations (700) génère le signal de référence incluant les informations d'identification allouées à chacun des appareils de génération de signaux (600) dans la section effective allouée à chacun des appareils de génération de signaux (600) et mesure une position de chacun des appareils de génération de signaux (600) à l'aide du signal ultrasonore reçu dans la section effective allouée à chacun des appareils de génération de signaux (600).

【Figure 1】

【Figure 2】

SYSTEM A
- RECEIVED REFERENCE SIGNAL
- RECEIVED ULTRASONIC SIGNAL 1
- RECEIVED ULTRASONIC SIGNAL 2

SYSTEM B
- RECEIVED REFERENCE SIGNAL
- RECEIVED ULTRASONIC SIGNAL 1
- RECEIVED ULTRASONIC SIGNAL 2

EP 2 458 476 B1

【Figure 3】

POWER SUPPLY UNIT

BUTTON UNIT

FIRST REFERENCE SIGNAL RECEPTION UNIT

REFERENCE SIGNAL GENERATION UNIT

SIGNAL GENERATION CONTROLLER

ULTRASONIC GENERATION UNIT

IR/RF

IR/RF

IR/RF

ULTRASONIC SIGNAL

SECOND REFERENCE SIGNAL RECEPTION UNIT

ULTRASONIC SENSOR 1

ULTRASONIC SENSOR N

INFORMATION INPUT UNIT

[Figure 4]

EP 2 458 476 B1

【Figure 5】

Figure 5 — Flowchart

INFORMATION INPUT APPARATUS

S530 — IDENTIFY CORRESPONDING REFERENCE SIGNAL

S534 — MEASURE POSITION BY USING ULTRASONIC SIGNAL RECEIVED IN EFFECTIVE SECTION

S538 — INPUT INFORMATION

END

SIGNAL GENERATION APPARATUS

S510 — GENERATE REFERENCE SIGNAL AND ULTRASONIC SIGNAL

S520 — RECEIVE REFERENCE SIGNAL

S522 — IDENTIFY REFERENCE SIGNAL OF DIFFERENT SIGNAL GENERATION APPARATUS

S524 — IS THERE A POSSIBILITY OF INTERFERENCE?

NO

YES — S526 — CHANGE EFFECTIVE SECTION

END

DIFFERENT SIGNAL GENERATION APPARATUS

S515 — GENERATE REFERENCE SIGNAL AND ULTRASONIC SIGNAL

END

【Figure 6】

POWER SUPPLY UNIT — 610

THIRD REFERENCE SIGNAL RECEPTION UNIT — 620

SIGNAL GENERATION CONTROLLER — 630

ULTRASONIC GENERATION UNIT — 640

600

700

REFERENCE SIGNAL

REFERENCE SIGNAL

ULTRASONIC SIGNAL

700

FOURTH REFERENCE SIGNAL RECEPTION UNIT — 710

REFERENCE SIGNAL GENERATION UNIT — 720

INFORMATION INPUT CONTROLLER — 740

INFORMATION INPUT UNIT — 750

730

ULTRASONIC SENSOR 1 — 730-1

ULTRASONIC SENSOR N — 730-n

【Figure 7】

【Figure 8】

【Figure 9】

【Figure 11】

【Figure 12】

**EP 2 458 476 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080169132 A1